# EUROPÄISCHE PATENTSCHRIFT

(11) **EP 0 481 573 B1**
(45) Veröffentlichungstag und Bekanntmachung des Hinweises auf die Patenterteilung: **20.03.1996**
(21) Anmeldenummer: 91250250.7
(22) Anmeldetag: 10.09.1991
(51) Int. Cl.: F16K 47/02, F15D 1/00, F16L 55/02

(54) **Vorrichtung zum Reduzieren des Druckes eines gasförmigen Mediums**
Device for pressure reduction of a gaseous medium
Dispositif pour réduction de pression d'un média à gaz

(30) Priorität: 17.10.1990 DE 4033362
(43) Veröffentlichungstag der Anmeldung: 22.04.1992
(73) Patentinhaber: Jäkel, Horst, D-16515 Schmachtenhagen (DE)
(72) Erfinder: Jäkel, Horst, D-16515 Schmachtenhagen (DE)
(74) Vertreter: Olbricht, Karl Heinrich, Dipl.-Phys.

(56) Entgegenhaltungen:
- DD-A- 125 437
- DE-A- 2 423 749
- DE-A- 3 108 051
- DE-A- 3 224 011
- DE-A- 3 304 523
- DE-B- 1 945 035
- US-A- 4 041 982

## Beschreibung

Die Erfindung betrifft eine Vorrichtung zum Reduzieren des Druckes eines gasförmigen Mediums nach dem Oberbegriff des Hauptanspruchs.

In Dampfumformstationen muß Dampf von einem hohen Druck und großer Temperatur entspannt und gekühlt werden. Hierfür hat man Vorrichtungen mit mehrstufig geregeltem Druckabbau sowie Dampfkühlung durch Direkteinspritzung von Wasser eingesetzt. Namentlich in bezug auf Materialabtrag bestanden jedoch verschiedene Nachteile; hintereinandergeschaltete Drosselstufen in Form von Lochkörben o.dgl., wie etwa in DE-A-2 500 723 beschrieben, zerlegen den Dampfstrom nämlich bloß in eine Anzahl radialer Teilströme, die zwar grundsätzlich einen niedrigeren Lärmpegel ermöglichen, jedoch an den Bauteilen im Drosselbereich hohen Verschleiß erzeugen.

Eine Vorrichtung gemäß DD-A-125 437, die den Oberbegriff des Anspruchs 1 offenbart, hat als Umlenkelement ein Strömleitprofil mit einer Kegelspitze, die in einem zylindrischen Hohlraum einem flachen Boden eines gebohrten Hohlkegels gegenübersteht. Unvermeidlich ruft die Hochdruckströmung in dem konstant gegebenen Hohlraum Schwingungen mit stehenden Wellen hervor, ähnlich wie in einer akustischen Trommel, wobei eine enorme, vorwiegend hochfrequente Lärmbelastung erzeugt wird. Das Einhalten des für Kraftwerke vorgegebenen Lärmpegels von z.B. 85 dBA ist mit den herkömmlichen Fluiddrosselvorrichtungen nicht möglich. Durch die große Strömungsenergie beim Auftreffen auf die Wandungen entsteht zudem zwangsläufig ein beträchtlicher Materialabtrag.

Der Erfindung liegt die Aufgabe zugrunde, eine Vorrichtung zum Reduzieren des Druckes eines gasförmigen Mediums zu schaffen, die den Druck unterkritisch für alle Lastbereiche entspannt und die Einhaltung eines zulässigen Schalldruckpegels ermöglicht.

Diese Aufgabe wird erfindungsgemäß durch die Merkmale des Hauptanspruchs gelöst. Die Maßnahmen der Ansprüche 2 bis 4 betreffen vorteilhafte Weiterbildungen und Verbesserungen.

Erfindungsgemäß sind zwei Umlenkelemente mit von den Stirnflächen aus zueinander entgegengerichteten Kegeln vorhanden, welche zumindest in Richtung der Hohlraumachse stehende Wellen verhindern bzw. brechen, so daß die Schallerzeugung schon an der Quelle eingedämmt wird. Auch wird der Gas- bzw. Dampfstrom in tangentiale Teil-Gegenströme aufgeteilt, wozu um den Lochkorb herum Drosselscheiben mit Durchgangskanälen zwecks Strömungsverbindung zu dem Lochkegel vorgesehen sind. Im Betrieb wird eintretender Dampf durch den Lochkorb in Teilströme aufgespalten, die im Innenbereich der Drosselscheibe zunächst radial auf Stege treffen. Das bewirkt eine weitere Strömungs-Unterteilung in tangentialer Richtung und jeweils einen Zusammenprall mit dem vom nächsten Steg umgelenkten Teilstrom. Die so schon zu Anfang äußerst effektiv gegeneinander abgebremsten Dampf-Teilströme gelangen über Kanäle in die folgende Drosselstufe, wo der Druck an Stegen und Kanälen in gleicher Weise weiter abgebaut wird. Das setzt sich in der äußeren Drosselstufe an Stegen sowie Kanälen fort. Abweichend von den üblichen Vorrichtungen wird die kinetische Energie des Dampfes also in einer Vielzahl umgelenkter Gegenströme aufgezehrt, was mit einer wesentlichen Verschleißminderung einhergeht.

Ein Ausführungsbeispiel der Erfindung ist in der Zeichnung dargestellt und wird in der nachfolgenden Beschreibung näher erläutert. Es zeigen:
- Fig. 1: einen Teilschnitt durch eine Dampfumformstation,
- Fig. 2: einen Schnitt durch einen Lochkorb mit Lochkegel,
- Fig. 3a: eine Aufsicht auf eine Drosselscheibe und
- Fig. 3b: einen Schnitt durch die Drosselscheibe gemäß den Schnittlinien A-A nach Fig. 3a.

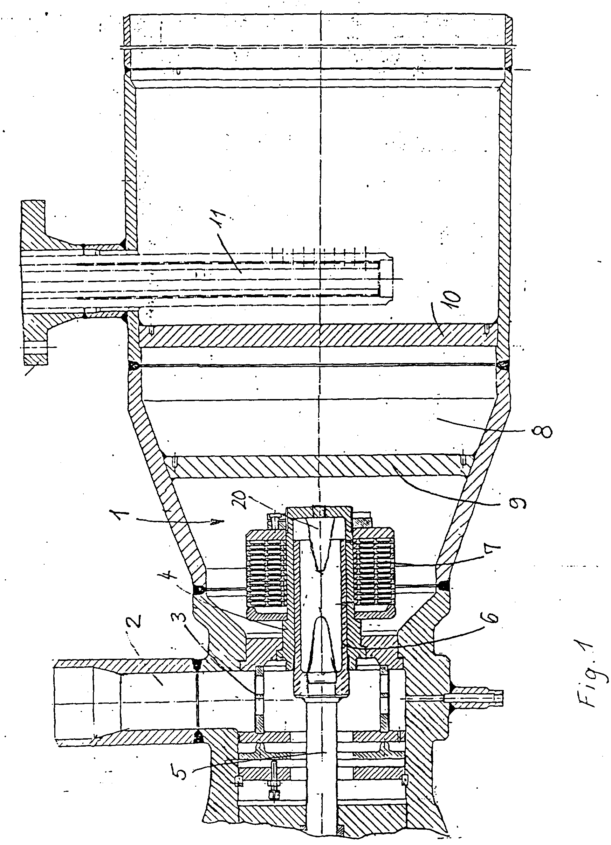

In Fig. 1 ist ein Teil einer Dampfumformstation dargestellt; die Dampfumform- bzw. Dampfreduzierstation weist eine Drosselvorrichtung 1 auf, die dem Einlaßkanal 2 des Dampfes nachgeschaltet ist, wobei in den Einlaßkanal 2 ein Sieb 3 eingesetzt ist. Die Drosselvorrichtung 1 besteht aus mindestens einem Lochkorb 4, der fest in den Durchlaßkanal des Dampfes eingesetzt ist, einem mit einer Hubstange 5 versehenen Lochkegel 6, der in dem Lochkorb 4 verschiebbar angeordnet ist, einer Mehrzahl von auf dem äußeren Umfang des Lochkorbes 4 sitzenden Drosselscheiben 7, einer ersten über den Querschnitt des Auslaßkanales 8 des Dampfes, der sich trichterförmig erweitert, erstreckende Lochscheibe 9 und einer zweiten Lochscheibe 10, die in dem Bereich des Auslaßkanals 8 mit konstantem Querschnitt angeordnet ist. In den Auslaßkanal 8 ragt ein Einspritzkühler 11 hinein, der den im Druck herabgesetzten Dampf durch Einspritzen einer kühlenden Flüssigkeit abkühlt. Mit dieser mehrstufigen Drosselvorrichtung 1 läßt sich der Dampfdruck beispielsweise von 86 bar bis auf 1,2 bar in einer unkritischen Entspannung herabsetzen.

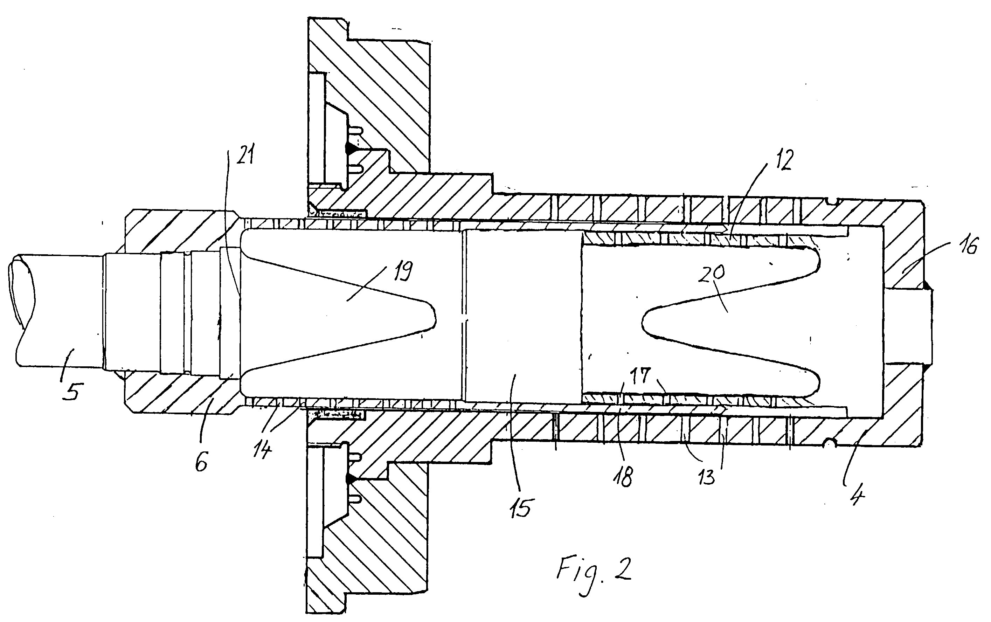

In Fig. 2 ist die Anordnung des Lochkorbes 4 und des Lochkegels 6 genauer dargestellt, wobei zusätzlich ein weiterer Lochkorb 12 vorgesehen ist. Der erste Lochkorb 4 besteht aus einer zum Einlaßkanal 2 offenen rohrförmigen Hülse, deren Wandungen im hinteren Bereich, ab der Mitte, durch eine Vielzahl von Löchern 13 durchdrungen wird. Der Lochkegel 6 besteht ebenfalls aus einem nach einer Seite offenen Rohrstück, wobei das geschlossene Teil, das dem Einlaßkanal 2 zugewandt ist, fest mit der Hubstange 5 verbunden ist. Der Lochkegel ist in seinem vorderen Bereich ebenfalls mit einer Vielzahl von Löchern 14 versehen, die die Wandungen des Rohrstückes durchqueren. Der Lochkegel 6 gleitet in den Lochkorb 4, wobei von dem Lochkorb 4 und dem Lochkegel 6 ein Hohlraum 15 gebildet wird. In die geschlossene Stirnfläche 16 des Lochkorbes 4 ist der weitere Lochkorb 12 eingesetzt und fest mit dem ersten Lochkorb 4 verbunden. Der weitere Lochkorb 12 besteht aus einem zum Hohlraum 15 hin offenen Rohrstück, in dessen Wandungen wiederum Löcher 17 vorgesehen sind. Der weitere Lochkorb 12 ist zum ersten Lochkorb 4 mit Abstand angeordnet, derart, daß die Wandungen 18 des Lochkegels in den Zwischenraum zwischen erstem und zweitem Lochkorb 4, 12 eingreifen kann.

Um Geräusche, die sich aufgrund von Frequenzschwingungen der Schallwellen in dem Hohlraum 15 ausbilden könnten, zu vermeiden, sind in dem Inneren des Hohlraums Umlenkelemente 19, 20 angeordnet, die im vorliegenden Ausführungsbeispiel als trichter- oder kegelförmige Erhebungen ausgebildet sind, die sich von der geschlossenen Stirnfläche 21 des Lochkegels 6 und von der geschlossenen Stirnfläche 16 des ersten Lochkorbes bzw. des weiteren Lochkorbes 12 in den Hohlraum 15 hinein erstrecken. Selbstverständlich können die Umlenkelemente 19, 20 auch in anderer Weise ausgebildet sein, die den Gegebenheiten entsprechen. Beispielsweise können an den kegelförmigen Umlenkelementen 19, 20 weitere Erhebungen angeordnet sein.

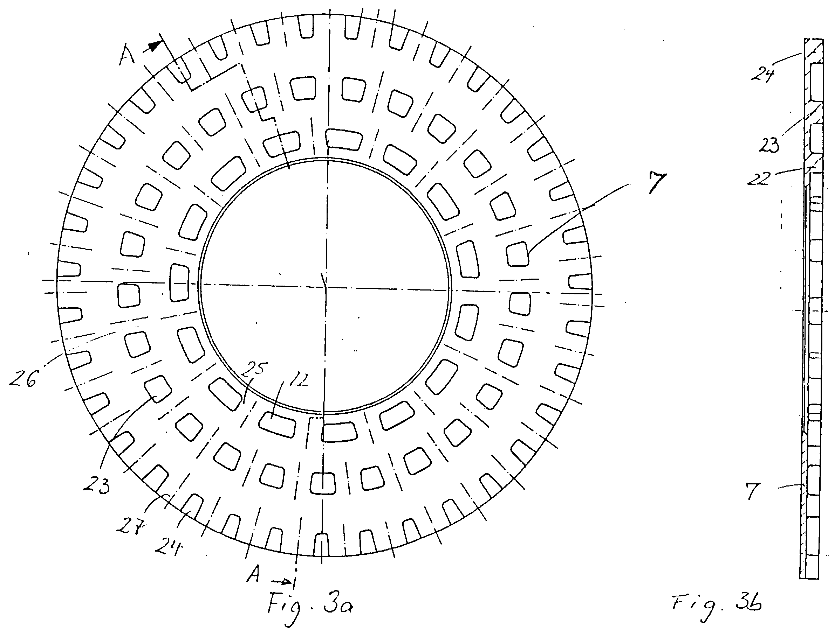

In Fig. 3 ist eine Drosselscheibe dargestellt, die, wie in Fig. 1 gezeigt ist, auf dem Umfang des Lochkorbes 4, jeweils hintereinanderliegend, sitzen. Die Drosselscheibe 7 ist ringförmig ausgebildet und weist auf ihrer einen Oberfläche eine Vielzahl von Erhebungen 22, 23, 24 auf. Die Erhebungen 22, 23, 24 sind jeweils ringförmig konzentrisch angeordnet, wobei zwischen den Erhebungen 22, 23, 24 Abstände 25, 26, 27 bestehen. Die Erhebungen 22, 23, 24 haben unterschiedliche Breiten und sind versetzt zueinander angeordnet Auf diese Weise bilden sich, wenn die Drosselscheiben 7, wie in Fig. 1 gezeigt, hintereinanderliegen, derart, daß die flache Oberfläche der einen Drosselscheibe auf den Erhebungen der benachbarten Drosselscheibe abgestützt ist, Durchgangskanäle mit mehreren Umlenkungen bzw. Verengungen und Entspannungsräumen.

Die Funktionsweise der in Fig. 1 dargestellten Vorrichtung ist wie folgt. Der Dampf gelangt mit hohem Druck in den Einlaßkanal 2 und wird durch das Sieb 3 geleitet, indem der Druck geringfügig herabgesetzt wird. Die Bewegung der Hubstange 5 und somit die Stellung des Lochkegels 6 in dem Lochkorb 4 wird über eine nicht dargestellte Steuereinrichtung gesteuert, und zwar abhängig vom vorgegebenen Lastbereich. Die in Fig. 1 gezeigte Stellung zeigt den geschlossenen Zustand, d.h. es gelangt kein Dampf aus dem Einlaßkanal 2 in den Hohlraum 15 hiein. In Fig. 2 ist der Lochkegel 3 teilweise aus dem Lochkorb 4 herausgezogen, so daß der Dampf aus dem Kanal 2 über die mit dem Kanal 2 in Verbindung stehenden Löcher 14 in den Hohlraum 15 strömt. Die Strömung wird an dem Umlenkelement 19 gebrochen, so daß sich keine Resonanzschwingungen, die sich auf den Schalldruckpegel auswirken, bilden können. Der Dampf gelangt weiterhin über die Löcher 17 des weiteren Lochkorbes 12 in den Zwischenraum zwischen beiden Lochkörben 4, 12, der durch den Lochkegel freigegeben wird und strömt durch die Löcher 13 des ersten Lochkorbes 4 in die durch die Drosselscheiben 7 gebildeten Durchgangskanäle. Vorzugsweise sind die Löcher 17 des weiteren Lochkorbes 12 versetzt zu den Löchern 13 des ersten Lochkorbes 4, so daß eine weitere Umlenkung der Dampfströmung erfolgt.

Auch über die Drosselscheiben 7 wird eine mehrstufige Regelung erzielt, denn je nach Stellung des Lochkegel 6 und damit je nach Lastbereich wird eine unterschiedliche Anzahl von Drosselscheiben freigegeben, die von dem Dampf durchströmt werden. In den Durchgangskanälen der Drosselscheiben 7 strömen die Dampfströme gegen die Erhebungen 22, 23, 24 und werden umgelenkt und die Dampfströme treffen aufeinander, wodurch Energie vernichtet wird. Nach Verlassen der Drosselscheiben 7 strömt der Dampf durch die zwei Lochscheiben 9, 10, wodurch eine weitere geringfügige Entspannung durchgeführt wird, wobei die Lochscheiben hauptsächlich zur Vergleichmäßigung der Strömung dienen.

Durch diese Vorrichtung kann eine geregelte unterkritische Entspannung erzielt werden, wobei die Regelung abhängig vom Hub der Hubstange 5, der wiederum abhängig von dem Lastbereich ist, erfolgt. Die Löcher in den Lochkörben bzw. dem Lochkegel können derart angeordnet werden, daß sich eine gewünschte Kennlinie der Durchflußmenge in Abhängigkeit von dem Hub der Hubstange 5 ergibt. Im Fall einer linearen Kennlinie sind die Löcher gleichmäßig über den Umfang verteilt. Auch die mehrstufig angeordneten Drosselscheiben haben Einfluß auf die jeweiligen Kennlinien.

Mit Hilfe der beschriebenen Vorrichtung kann beispielsweise folgende Druckreduzierung erzielt werden: Von 86 bar auf 85 bar durch Sieb 3, von 85 bar auf 48 bar über Lochkegel 6 und Lochkorb 4, von 26 bar auf 12,8 bar über eine erste Drosselscheibe 7, von 12,8 bar bis 6,4 bar über eine zweite Drosselscheibe 7, von 6,4 bar auf 3,2 bar über eine dritte Drosselscheibe, von 3,2 bar auf 2,2 bar über die Lochscheibe 9 und von 2,2 bar auf 1,2 bar über die Lochscheibe 10. Diese Angaben sind nur beispielhaft, selbstverständlich können auch mehrere Stufen oder weniger Stufen für die Druckreduzierung vorgesehen werden.

Die Einspritzung über den Einspritzkühler 11 wird erst bei entspanntem Druck im Auslaßkanal 8 vorgenommen, wodurch die Materialbeanspruchung (Thermoschock) minimiert wird. Bei bekannten Reduziervorrichtungen wird eine Kühlung in dem Bereich durchgeführt, in dem die Druckherabsetzung von einem höheren Druck zu einem niedrigeren Druck erfolgt, wodurch eine zusätzliche Materialbeanspruchung und höhere Geräuschemission auftreten.

## Patentansprüche

1. Vorrichtung zum Reduzieren des Druckes eines gasförmigen Mediums mit einem Einlaßkanal (2), dem Gas, namentlich Dampf, unter hohem Druck zugeführt wird, und mit einer als mehrstufige Regelvorrichtung ausgebildeten Drosselvorrichtung (1), durch welche die Entspannung bei unterschiedlichen Lastbereichen unterkritisch geregelt wird und welche einen verschiebbar in einem Lochkorb (4) angeordneten Lochkegel (6) mit über den Umfang verteilten Löchern aufweist, wobei die Durchflußmenge abhängig von der Stellung des Lochkegels (6) zum Lochkorb (4) geregelt wird und in einem zwischen den inneren Stirnflächen dieser beiden Elemente befindlichen Hohlraum (15) eine Umlenkanordnung (19, 20) vorhanden ist, dadurch **gekennzeichnet,** daß die Umlenkanordnung zwei kegelförmige Erhebungen (19, 20) aufweist, die jeweils von der inneren Stirnfläche des Lochkegels (6) und des Lochkorbes (4) in den Hohlraum (15) ragen, und daß um den Lochkorb (4) herum eine Mehrzahl von aufeinanderliegenden Drosselscheiben (7) mit Durchganskanälen angeordnet sind, welch letztere mit den Löchern (13) des Lochkorbes (4) in Verbindung stehen.

2. Vorrichtung nach Anspruch 1, dadurch **gekennzeichnet,** daß in dem ersten Lochkorb (4) ein weiterer Lochkorb (12) mit über seinen Umfang verteilten Löchern (17) vorgesehen ist, wobei der Lochkegel (6) zwischen der inneren Umfangsfläche des ersten und der äußeren Umfangsfläche des weiteren Lochkorbes (4, 12) verschiebbar angeordnet ist.

3. Vorrichtung nach Anspruch 2, dadurch **gekennzeichnet,** daß die Löcher (13) im ersten Lochkorb (4) zu den Löchern (17) im weiteren Lochkorb (12) versetzt angeordnet sind.

4. Vorrichtung nach einem der Ansprüche 1 bis 3, dadurch **gekennzeichnet,** daß die Drosselscheibe (7) ringförmig angeordnete, mit Abstand zueinander versehene Erhebungen (20, 23, 24) aufweist, wobei die Erhebungen (22) des einen Ringes zu den Erhebungen (23) des anderen Ringes versetzt sind, und daß die Umfangs-Lochverteilungen des Lochkegels (6) und des Lochkorbes (4, 12) aufeinander derart abgestimmt sind, daß die Durchfluß-Kennlinie abhängig vom Verschiebehub des Lochkegels (6) beeinflußbar ist.

## Claims

1. A device for pressure reduction of a gaseous medium, comprising an inlet channel (2), which has supplied thereto gas, namely steam, at a high pressure, and comprising a throttling device (1) formed as a multistage control device, by which drop of pressure is controlled in a subcritical manner at different load ranges and which comprises a perforated cone (6) movably arranged in a perforated basket (4) and including holes distributed over the circumference, with the flow rate being controlled in response to the position of said perforated cone (6) relative to said perforated basket (4) and a deflector assembly (19, 20) being provided in a cavity (15) disposed between the inner faces of said two elements, **characterized in that** said deflector assembly comprises two conical elevations (19, 20) which project each from the inner face of said perforated cone (6) and said perforated basket (4) into said cavity (15), and that a plurality of superimposed throttling discs (7) including passage channels are arranged around said perforated basket (4), said passage channels communicating with holes (13) of said perforated basket (4).

2. The device according to claim 1, **characterized in that** said first perforated basket (4) has provided therein another perforated basket (12) including holes (17) distributed over the circumference thereof, said perforated cone (6) being movably arranged between the inner circumferential surface of said first perforated basket (4) and the outer circumferential surface of said further perforated basket (12).

3. The device according to claim 2, **characterized in that** said holes (13) in said first perforated basket (4) are offset relative to said holes (17) in said further perforated basket (12).

4. The device according to any of claims 1 to 3, **characterized in that** said throttling disc (7) comprises elevations (20, 23, 24) arranged in annular fashion and spaced apart from one another, said elevations (22) of the one ring being offset to said elevations (23) of the other ring, and that the circumferential distributions of the holes of said perforated cone (6) and of said perforated basket (4, 12) are adapted to each other such that the flow rate characteristics can be influenced in response to the displacement lift of said perforated cone (6).

## Revendications

1. Dispositif pour réduction de pression d'un média à gaz avec un canal d'entrée (2) qui est alimenté en gaz sous haute pression, notamment en vapeur, et avec un dispositif d'étranglement (1) en forme de dispositif de réglage à plusieurs niveaux, par lequel la détente est réglée sous-critiquement dans différents domaines de charge et qui possède un cône perforé (6) avec des trous répartis sur sa circonférence et coulissant dans un panier perforé (4), le flux étant réglé en fonction de la position du cône perforé (6) par rapport au panier perforé (4) et un dispositif de déviation (19, 20) étant localisé dans une cavité (15) entre les faces frontales internes de ces deux éléments, caractérisé en ce que le dispositif de déviation possède deux saillies (19, 20) en forme de cônes, qui vont depuis la face frontale respective du cône perforé (6) et du panier perforé (4) jusque dans la cavité (15), et en ce qu'autour du panier perforé (4) il y a une multitude de disques d'étranglement superposés (7) avec des canaux de passage, ces derniers étant reliés aux trous (13) du panier perforé (4).

2. Dispositif selon la revendication 1, caractérisé en ce que dans le premier panier perforé (4) est prévu un autre panier perforé (12) avec des trous (17) répartis sur sa circonférence, le cône perforé (6) pouvant coulisser entre la surface circonférentielle interne du premier et la surface circonférentielle externe de l'autre panier perforé (4, 12).

3. Dispositif selon la revendication 2, caractérisé en ce que les trous (13) du premier panier perforé (4) sont décalés par rapport aux trous (17) de l'autre panier perforé (12).

4. Dispositif selon l'une des revendications 1 à 3, caractérisé en ce que le disque d'étranglement (7) possède des saillies (20, 23, 24) positionnées en cercle et distantes les unes des autres, les saillies (22) de l'un des cercles étant décalées par rapport aux saillies (23) de l'autre cercle, et en ce que la répartition des trous circonférentiels du cône perforé (6) et du panier perforé (4, 12) est ajustée de telle sorte que la ligne caractéristique du flux peut être influencée par la course de coulissement du cône perforé (6).
